# EUROPÄISCHE PATENTSCHRIFT

(11) **EP 3 457 012 B1**
(45) Veröffentlichungstag und Bekanntmachung des Hinweises auf die Patenterteilung: **26.02.2020**
(21) Anmeldenummer: 18189099.7
(22) Anmeldetag: 15.08.2018
(51) Int. Cl.: F16L 3/22, F16L 3/227, H02G 3/32

(54) **BÜGELSCHELLE**
BOLT CLAMP
COLLIER D'ÉTRIER

(30) Priorität: 18.09.2017 DE 202017105636 U
(43) Veröffentlichungstag der Anmeldung: 20.03.2019
(73) Patentinhaber: OBO Bettermann Hungary Kft., 2347 Bugyi (HU)
(72) Erfinder: Danyis, Tamás, 2370 Dabas (HU); Kniep, Sascha, 58762 Altena (DE); Schauerte, Arno, 58710 Menden (DE)
(74) Vertreter: Köchling, Conrad-Joachim

(56) Entgegenhaltungen:
- DE-A1- 3 824 197
- DE-A1-102012 024 122
- DE-B- 1 236 620
- DE-U1- 8 504 051
- DE-U1-202015 007 620

## Beschreibung

Die Erfindung betrifft eine Bügelschelle zur Befestigung von Langformgütern, wie insbesondere Kabeln, an einer Profilschiene, insbesondere einer C-Profilschiene, aufweisend einen etwa U-förmigen Körper, wobei zwischen den Schenkeln der U-Form eine mittels einer die Basis der U-Form durchgreifenden Stellschraube verstellbare Druckwanne angeordnet ist, die das Langformgut teilweise umfassen und gegen eine auf der Profilschiene aufliegend anordbare Gegenwanne verspannen kann, wobei die freien Schenkelenden des etwa U-förmigen Körpers hakenartig ausgebildet sind und die abgewinkelten freien Enden der Schenkel der Profilschiene hintergreifen können.

Derartige Bügelschellen sind im Stand der Technik vielfach bekannt und weit verbreitet.

Eine Bügelschelle gattungsgemäßer Art ist beispielsweise aus der DE A 1236620 bekannt.

Derartige Bügelschellen dienen dazu, Langformgüter, wie insbesondere Kabel an Gebäudeteilen wie Decken oder Wänden zu verlegen und zu fixieren.

Je nach Durchmesser des zu verlegenden Kabels sind dabei Bügelschellen und Profilschienen in verschiedenen Größen und Abmessungen bekannt. So sind beispielsweise Bügelschellen für zu verlegende und zu fixierende Kabel von etwa 10 mm Kabeldurchmesser bis hin zu mehr als 100 mm Kabeldurchmesser bekannt und weisen entsprechende Abmessungen auf.

Bei der Verlegung derartiger Kabel mittels einer entsprechenden Bügelschelle wird in einem ersten Arbeitsgang die Profilschiene an der entsprechenden Wand oder Decke befestigt. Anschließend wird die Bügelschelle über das zu fixierende Kabel das kabelumgreifend aufgestülpt und an der Profilschiene verhakt oder eingehängt.

Nun wird die Gegenwanne zwischen Kabel und Schiene geschoben und mittels der Spannschraube die Druckwanne gegen das durchgeführte Kabel verspannt, wodurch einerseits das Kabel und andererseits die Bügelschelle an der Profilschiene fixiert ist. In der Praxis ist es jedoch bekannt und häufig üblich, bis zu drei parallel zueinander verlaufende Langformgüter wie Kabel mittels nur einer Bügelschelle zu fixieren. Hierzu ist es im Stand der Technik bekannt, eine abweichende Form aufweisende Gegenwanne als Doppelwanne zu bevorraten und zwischen zwei aufeinanderfolgenden Langformgütern wie Kabeln bei der Montage zu positionieren. Durch die abweichende Form der Doppelwannen ist es zum einen nachteilig, dass der Monteur vor Ort eine erhöhte Anzahl an Teilen bevorraten muss und zum anderen nachteilig, dass diese zwischen zwei parallel verlaufenden Langformgütern, wie Kabeln, angeordneten Doppelwannen keine Lagefixierung zwischen den zu fixierenden Kabeln sowohl in Zug- als auch in Schubrichtung aufweisen.

Aufgrund des eingangs genannten Standes der Technik liegt der vorliegenden Erfindung die Aufgabe zugrunde, eine Bügelschelle der eingangs genannten Art zu schaffen, bei der die Anzahl der vom Monteur vor Ort zu bevorratenden Teile verringert ist, bei der andererseits nach Positionierung zwischen zwei parallel zueinander angeordneten Langformgütern wie Kabeln eine Wegbegrenzung sowohl in Einschubrichtung des Langformgutes, wie auch in Zugrichtung des Langformgutes gegeben ist, welche dabei kostengünstig und einfach zu fertigen ist und eine hohe Lebensdauer aufweist.

Zur Lösung dieser Aufgabe schlägt die Erfindung vor, dass die Gegenwanne auf ihrer einen, dem Langformgut, insbesondere Kabel abgewandten Seite eine Profilierung aufweist, mittels derer die Gegenwanne mit der Profilierung einer weiteren, identischen Gegenwanne zu einer Doppelwanne verbindbar oder verbunden ist, wobei die Gegenwanne ein seitlich abragendes, etwa parallel zur Längsrichtung der Gegenwanne verlaufendes, Halteelement aufweist, welches einen Schenkel des etwa U- förmigen Körpers der Bügelschelle umgreift und nach Erreichen der Montagesollage diesen Schenkel mit einem am freien Ende des Halteelements ausgebildeten hakenartigen Vorsprung hintergreift, wobei der Schenkel des etwa U- förmigen Körpers der Bügelschelle in dieser Montagesolllage zwischen dem hakenartigen Vorsprung des Halteelements und einem von der Gegenwanne abragenden Bereich, der einen Übergangsbereich von der Gegenwanne zum Halteelement bildet, angeordnet ist.

Mittels einer derartigen Profilierung auf der dem Langformgut abgewandten Seite der Gegenwanne ist es auf schnelle und einfache Art und Weise ermöglicht, zwei identische Gegenwannen im Bereich ihrer Profilierung miteinander zu einer Doppelwanne zu verbinden, sodass hierdurch die parallele Anordnung von zwei aufeinanderfolgenden Langformgütern wie Kabeln innerhalb einer Bügelschelle ermöglicht ist ohne eine weitere, separate Doppelwanne zu verwenden.-Der Monteur braucht lediglich vor Ort zwei entsprechende, identische Gegenwannen miteinander zur Bildung einer Doppelwanne zu verbinden, um die parallele Verlegung von zwei oder mehreren Kabeln beziehungsweise Langformgütern zu ermöglichen. Anschließend wird auf an sich bekannter Art und Weise eine einzelne Gegenwanne zwischen Kabel und Profilschiene angeordnet. Somit ist die Anzahl der zu bevorratenden Teile für den Monteur vor Ort verringert.

Derartige Gegenwannen bestehen häufig aus Kunststoff, wie beispielsweise Polypropylen, und können im Spritzgießverfahren kostengünstig und einfach hergestellt werden und weisen dabei eine hohe Lebensdauer auf.

Die Ausbildung eines derartigen Halteelements mit hakenartigem Vorsprung bewirkt sowohl bei der Verwendung einer einzelnen Gegenwanne eine lagegenaue Positionierung am jeweiligen Schenkel der Bügelschelle als auch in der zusammengesetzten Lage mit einer weiteren Gegenwanne. In der zusammengesetzten Lage zweier Gegenwannen umgreift dabei jeweils ein Halteelement einer Gegenwanne einen Schenkel des etwa U-förmigen Körpers der Bügelschelle und umgreift diesen. Nach Erreichen dieser umgreifenden Lage ist ein Verschieben, das heißt Entfernen aus der Montagesolllage sowohl einer einzelnen Gegenwanne als auch einer aus zwei Gegenwannen zusammengesetzten Gegenwanne, sowohl bei auftretenden Kräften in Einschubrichtung als auch bei auftretenden Kräften in Zugrichtung, also gegen die Einschubrichtung, wirksam verhindert. Der jeweilige Schenkel des etwa U-förmigen Körpers der Bügelschelle befindet sich dabei in einem Bereich zwischen dem hakenartigen Vorsprung am freien Ende des Halteelements und dem von der Gegenwanne abragenden Bereich, der das Halteelement aufnimmt. Der Schenkel ist nach Erreichen dieser Montagesolllage zwischen diesen Bereichen fixiert, wodurch ein Verschieben sowohl in Einschubrichtung des Langformgutes, als auch in Zugrichtung des Langformgutes wirksam verhindert ist und sowohl eine einzelne Gegenwanne als auch eine zusammengesetzte Gegenwanne immer lagerichtig an der Bügelschelle positioniert ist.

Insbesondere beim späteren Verspannen von durchgeführten Langformgütern wie Kabeln, werden häufig Zug- beziehungsweise Druckkräfte auf die Gegenwannen ausgeübt, sodass diese ihre Sollposition verlassen, was durch die erfindungsgemäße Lösung wirksam verhindert ist.

Eine derartige erfindungsgemäße Gegenwanne kann darüber hinaus auch bei Bügelschellen anderer Art, wie beispielsweise einer Universalbügelschelle, einer Bügelschelle für Flacheisen oder einer Bügelschelle für Winkeleisen Verwendung finden, da hierbei lediglich die jeweilige Form der Schenkelenden des etwa U-förmigen Körpers der Bügelschelle abweichend ausgebildet ist, wodurch kein Einfluss auf die Funktion der Gegenwanne erfolgt. Durch die parallel zur Verlaufsrichtung der durchgeführten Langformgüter oder quer zur Verlaufsrichtung der durchgeführten Langformgüter angeordneten, eine Profilierung bildenden, Stege, ist ein schnelles und einfaches Verbinden zweier Gegenwannen zu einer Doppelwanne ermöglicht.

Insbesondere kann dabei besonders bevorzugt vorgesehen sein, dass die Profilierung durch parallele, sich zumindest über einen Teil der Länge der Gegenwanne erstreckende Längsstege, die in der Montagesolllage etwa parallel zum Langformgut beziehungsweise Kabel verlaufend und somit quer zur Profilschiene angeordnet sind, gebildet ist.

Die Anordnung derartiger Längsstege als Profilierung ermöglicht ein besonders schnelles und einfaches und dabei lagegenaues miteinander Verbinden zweier identischer Gegenwannen zur späteren Positionierung zwischen zwei parallel verlaufenden Langformgütern wie Kabeln. Hierzu müssen die zu einer Doppelwanne zu verbindenden Gegenwannen lediglich händisch voreinander positioniert und anschließend aufeinander zubewegt werden, wobei die linearen Stege ein seitliches Verrutschen verhindern und die lagegenaue Positionierung und anschließende Montagesolllage ermöglichen. Die linear verlaufenden Längsstege dienen dabei gleichzeitig sowohl als Positioniermittel wie auch nach Erreichen der zusammengeschobenen Gebrauchslage als Arretiermittel, wobei die linear verlaufenden Längsstege eine geringe Verklemmung gegenüber den parallel verlaufenden Längsstegen des jeweils anderen Teils ermöglichen.

Somit erfolgt bereits durch die Längsstege ein Verbleiben der zusammengesetzten Gegenwannen in der Gebrauchslage um diese bei der Montage zwischen zwei parallelen Kabeln anzuordnen.

Insbesondere kann besonders bevorzugt vorgesehen sein, dass die Profilierung durch parallele, sich mindestens über einen Teil der Länge oder der Breite der Gegenwanne erstreckende schwalbenschwanzartige Stege gebildet ist, wobei der Zwischenraum zwischen zwei parallelen schwalbenschwanzartigen Stegen einen Aufnahmeraum für einen schwalbenschwanzartigen Steg der weiteren, identischen Gegenwanne bildet.

Durch die schwalbenschwanzartige Form der Stege können diese auf einfache und schnelle Art und Weise ineinander geschoben werden, wobei ein sicherer Verbleib in dieser verbundenen Lage als Doppelwanne erfolgt. Alternativ zur schwalbenschwanzartigen Form der Stege können auch andere Formen, die einen Hinterschnitt und somit Halt am jeweils anderen Stück ermöglichen, Verwendung finden.

Auch kann dabei die Ausbildung der Stege sowohl als Längsstege, also etwa parallel zum befestigten Langformgut wie Kabel oder als Querstege, und somit etwa quer zur Verlaufsrichtung der Langformgüter beziehungsweise Kabel angeordnet sein.

Diese Ausbildung von Querstegen ist dabei grundsätzlich für jede, eine Profilierung bildende Stegform möglich.

Darüber hinaus kann besonders bevorzugt vorgesehen sein, dass die Profilierung Rastvorsprünge aufweist, wobei in der miteinander verbundenen Lage zweier Gegenwannen die Rastvorsprünge jeweils einen Wegbegrenzungsanschlag für einen an der anderen Gegenwanne ausgebildeten Rastvorsprung bilden.

Die zusätzlich zu den Längsstegen angeordneten Rastvorsprünge stellen bei dem Zusammensetzen zweier Gegenwannen zu einer Doppelwanne jederzeit sicher, dass die zusammengesetzte Gebrauchslage erreicht und nicht überschritten wird. Dies bedeutet, dass beim Zusammenschieben zweier zu verbindender Gegenwannen die Rastvorsprünge das Erreichen der Gebrauchslage zum einen durch einen Wegbegrenzungsanschlag bilden, wodurch der Monteur sofort Rückmeldung erhält, dass die beiden zusammengesetzten Gegenwannen nun ihre Gebrauchslage erreicht haben. Somit ist ein Schieben über das Erreichen der Gebrauchslage hinaus durch diese einen Wegbegrenzungsanschlag bildenden Rastsprünge wirksam verhindert.

Ein Ausführungsbeispiel der Erfindung ist in den Zeichnungen dargestellt und im Folgenden näher beschrieben.

Es zeigt:
- Figur 1: eine erfindungsgemäße Gegenwanne rückseitig schräg von oben gesehen;
- Figur 2: desgleichen vorderseitig schräg von oben gesehen;

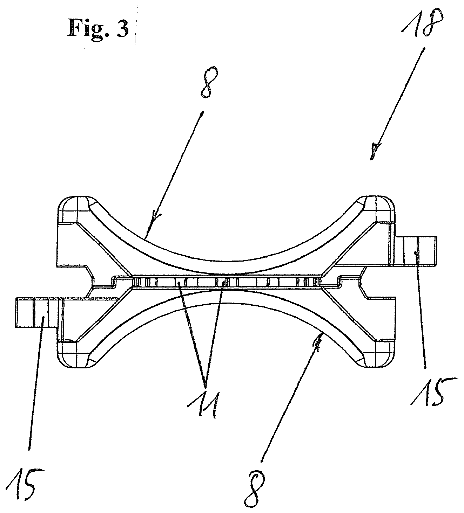

- Figur 3: zwei zusammengesetzte erfindungsgemäße Gegenwannen von vorne gesehen;

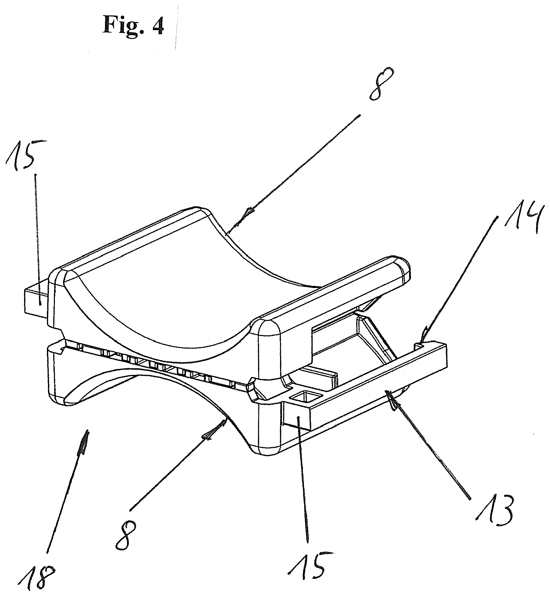

- Figur 4: desselben von schräg oben gesehen;
- Figur 5: eine Bügelschelle mit erfindungsgemäßen Gegenwannen und zwei parallel angeordneten Kabeln an einer C-Profilschiene montiert.
- Figur 6: ein weiteres Ausführungsbeispiel der Erfindung mit schwalbenschwanzartigen Längsstegen als Profilierung.

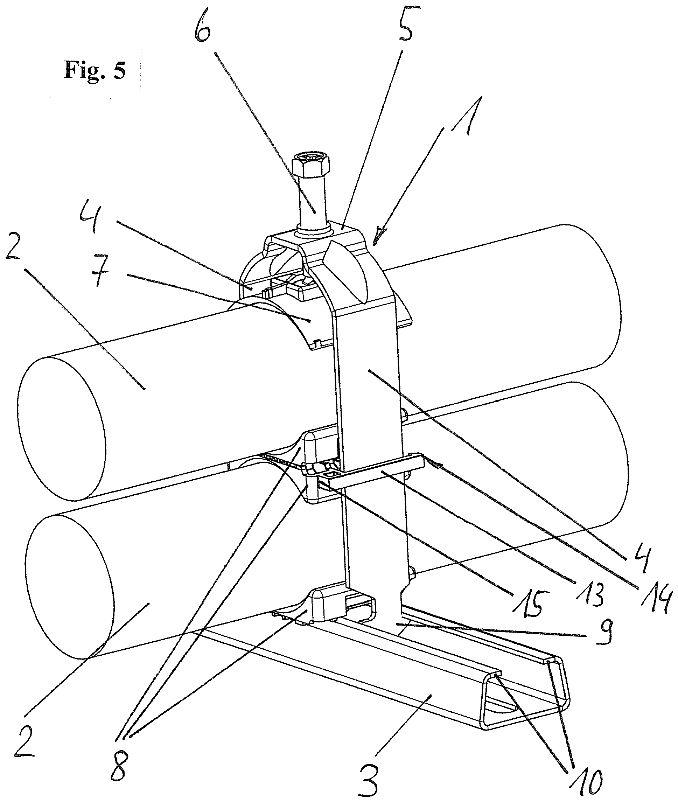

In Figur 5 ist eine Bügelschelle 1 zur Befestigung von Langformgütern, im Ausführungsbeispiel von Kabeln 2, an einer Profilschiene, im Ausführungsbeispiel an einer C-Profilschiene 3 gezeigt. Die Bügelschelle 1 weist einen etwa U-förmigen Körper auf, wobei zwischen den Schenkeln 4 der U-Form eine mittels einer die Basis 5 der U-Form durchgreifenden Stellschraube 6 verstellbare Druckwanne 7 angeordnet ist. Die Druckwanne 7 umfasst das Kabel 2 teilweise und verspannt dieses Kabel 2 gegen eine auf der Profilschiene 3 aufliegend angeordnete Gegenwanne 8. Dabei sind im Ausführungsbeispiel die freien Schenkelenden des etwa U-förmigen Körpers hakenartig (bei 9) ausgebildet und hintergreifen die abgewinkelten freien Enden 10 der Schenkel der C-Profilschiene 3.

Erfindungsgemäß weist die Gegenwanne 8 auf ihrer dem Langformgut, im Ausführungsbeispiel Kabel 2, abgewandten Seite eine Profilierung auf, mittels derer die Gegenwanne 8 mit der Profilierung einer weiteren, identischen Gegenwanne 8 verbindbar oder verbunden ist. Hierdurch ist auf schnelle und einfache Art und Weise, durch einfaches Ineinanderschieben der Profilierungen die Verbindung zweier Gegenwannen 8 zu einer Doppelwanne 18 ermöglicht, sodass diese zwischen zwei parallel zueinander zu verlegenden Langformgütern wie Kabeln 2 angeordnet werden kann. Hierdurch ist für einen Monteur vor Ort die Anzahl an mitzuführenden Teilen reduziert, da er nur eine Art Gegenwanne 8 mitführen muss und diese bei Bedarf mit einer weiteren, identischen Gegenwanne 8 zu einer Doppelwanne 18 verbindet, um diese miteinander verbundenen Teile zwischen zwei parallel zueinander verlaufenden Langformgütern anzuordnen.

Derartige Gegenwannen 8 bestehen häufig aus Kunststoff, wie beispielsweise Polypropylen und sind kostengünstig und einfach herzustellen und weisen dabei eine hohe Lebensdauer auf.

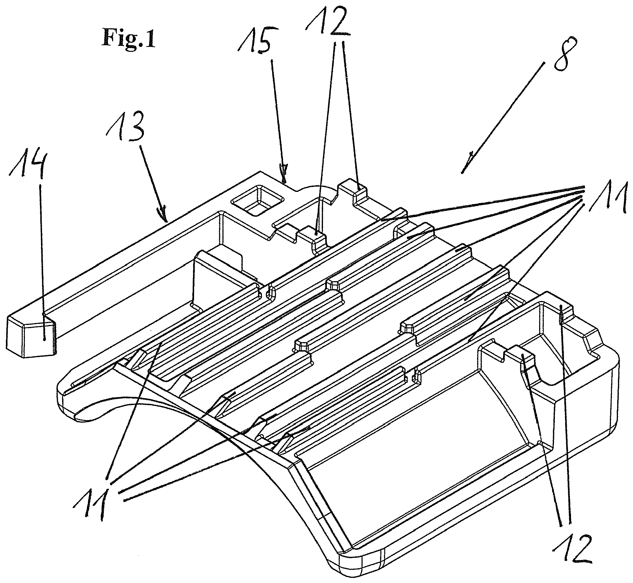

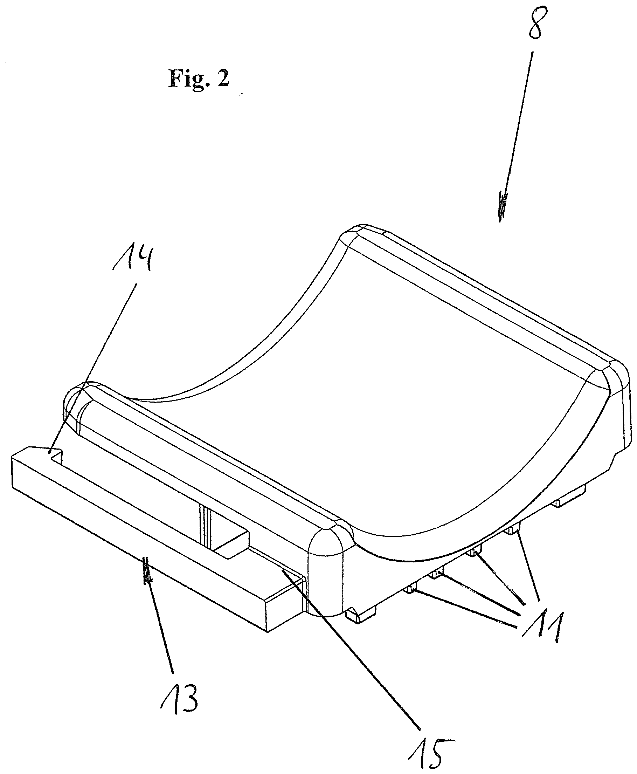

Wie insbesondere aus den Figuren 1 und 2 ersichtlich, ist die Profilierung durch parallele, sich zumindest über einen Teil der Länge der Gegenwanne 8 erstreckende Längsstege 11 gebildet. Dabei verlaufen die Längsstege 11 in der Montagesolllage etwa parallel zum Langformgut, im Ausführungsbeispiel Kabel 2, und sind somit etwa quer zur C-Profilschiene 3 angeordnet.

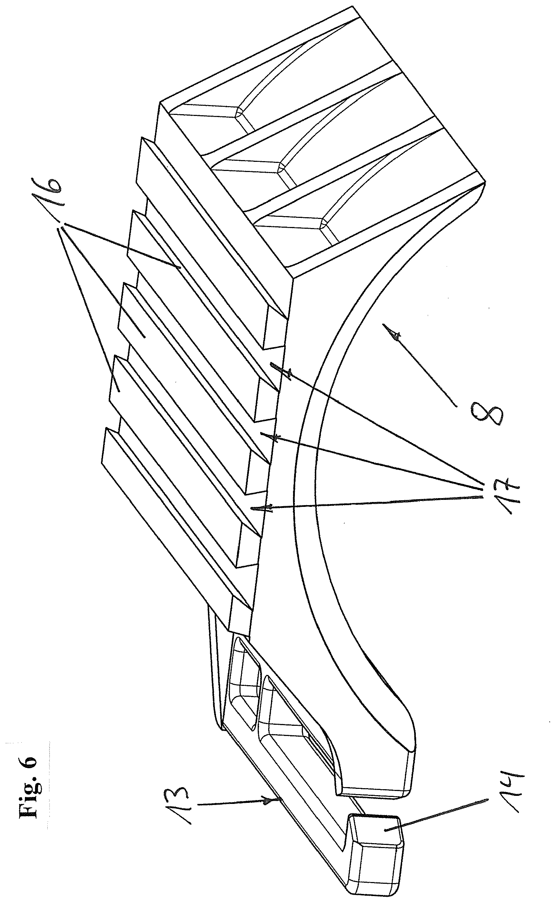

Bei dem in Figur 6 gezeigten Ausführungsbeispiel weisen die Stege 16 eine schwalbenschwanzartige Form auf. Dabei ist der Abstand zwischen zwei parallel verlaufenden, schwalbenschwanzartige Form aufweisenden Stegen 16 derart bemessen, dass in dem Zwischenraum 17 jeweils ein schwalbenschwanzartiger Steg 16 einer weiteren Gegenwanne 8 aufgenommen und gehalten werden kann.

Somit kann auch hierbei durch einfaches Ineinanderschieben zweier Gegenwannen 8 eine Doppelwanne 18 gebildet werden, wobei durch die schwalbenschwanzartigen Stege 16, die in den jeweiligen Zwischenraum 17 einer weiteren Gegenwanne eingeführt werden, ein sicherer Zusammenhalt zweier zu einer Doppelwanne 18 verbundener Gegenwannen 8 ermöglicht ist.

Zudem weist die Profilierung zusätzliche Rastvorsprünge 12 auf, wie insbesondere aus Figur 1 ersichtlich, wobei in der miteinander verbundenen Lage zweier Gegenwannen 8 die Rastvorsprünge 12 jeweils einen Wegbegrenzungsanschlag für einen an der anderen Gegenwanne 8 ausgebildeten Rastvorsprung 12 bilden. Hierdurch ist es beim Verbinden, das heißt Ineinanderschieben zweier zu verbindender Gegenwannen 8 jederzeit sichergestellt, dass diese nicht über die Endlage hinaus zueinander verschoben werden können. Somit ist ein Verschieben über die Solllage hinaus durch die einen Wegbegrenzungsanschlag bildenden Rastvorsprünge 12 wirksam verhindert und ein genauer Sitz zweier miteinander verbundener Gegenwannen 8 sichergestellt.

Um einen lagegenauen Sitz sowohl einer einzelnen Gegenwanne 8 als auch zweier miteinander verbundener Gegenwannen 8 an dem einen Schenkel 4 beziehungsweise an beiden Schenkeln 4 der Bügelschelle 1 sicherzustellen, ist an jeder Gegenwanne 8 jeweils ein seitlich abragendes, etwa parallel zur Längsrichtung der Gegenwanne 8 verlaufendes, Halteelement 13 ausgebildet. Das Halteelement 13 umgreift in der Montagesolllage jeweils einen Schenkel 4 des etwa U-förmigen Körpers der Bügelschelle 1 und hintergreift mit einem am freien Ende des Halteelements 13 ausgebildeten hakenartigen Vorsprung 14 diesen Schenkel 4. In dieser Lage sind die kurzen Seitenkanten des Schenkels 4 des etwa U-förmigen Körpers der Bügelschelle 1 zwischen dem hakenartigen Vorsprung 14 des Halteelements 13 und dem von der Gegenwanne 8 abragenden Bereich 15, der einen Übergangsbereich von der Gegenwanne 8 zum Halteelement 13 bildet, angeordnet und die jeweilige Gegenwanne 8 somit sowohl gegen ein Verschieben in Einschubrichtung des Langformgutes, als auch gegen ein Verschieben in Zugrichtung des Langformgutes gesichert. Somit ist insbesondere beim späteren Ausüben von Zug- oder Druckkräften sowohl in Einschubrichtung als auch in Zugrichtung des Langformgutes ein Verbleib in dieser Montagesolllage sichergestellt.

Die Erfindung ist nicht auf das Ausführungsbeispiel beschränkt, sondern im Rahmen der Offenbarung vielfach variabel.

### Bezugszeichenliste:

- 1): Bügelschelle
- 2): Kabel
- 3): C-Profilschiene
- 4): Schenkel
- 5): Basis
- 6): Stellschraube
- 7): Druckwanne
- 8): Gegenwanne
- 9): Hakenartige Enden (von 4)
- 10): Abgewinkelte freie Enden (von 3)
- 11): Längsstege
- 12): Rastvorsprünge
- 13): Halteelement
- 14): hakenartiger Vorsprung (an 13)
- 15): von 8 abragender Bereich
- 16): schwalbenschwanzartige Stege
- 17): Zwischenraum
- 18): Doppelwanne

## Patentansprüche

1. Bügelschelle (1) zur Befestigung von Langformgütern, wie insbesondere Kabeln (2), an einer Profilschiene, insbesondere einer C-Profilschiene (3), aufweisend einen etwa U-förmigen Körper, wobei zwischen den Schenkeln (4) der U- Form eine mittels einer die Basis (5) der U-Form durchgreifenden Stellschraube (6) verstellbare Druckwanne (7) angeordnet ist, die das Langformgut (2) teilweise umfassen und gegen eine auf der Profilschiene (3) aufliegend anordbare Gegenwanne (8) verspannen kann, wobei die freien Schenkelenden des etwa U- förmigen Körpers hakenartig (9) ausgebildet sind und die abgewinkelten freien Enden (10) der Schenkel der Profilschiene (3) hintergreifen können, **dadurch gekennzeichnet, dass** die Gegenwanne (8) auf ihrer einen, dem Langformgut, insbesondere Kabel (2) abgewandten Seite eine Profilierung (11,16) aufweist, mittels derer die Gegenwanne (8) mit der Profilierung einer weiteren, identischen Gegenwanne (8) zu einer Doppelwanne (18) verbindbar oder verbunden ist, wobei die Gegenwanne (8) ein seitlich abragendes, etwa parallel zur Längsrichtung der Gegenwanne (8) verlaufendes, Halteelement (13) aufweist, welches einen Schenkel (4) des etwa U- förmigen Körpers der Bügelschelle (1) umgreift und nach Erreichen der Montagesollage diesen Schenkel (4) mit einem am freien Ende des Halteelements (13) ausgebildeten hakenartigen Vorsprung (14) hintergreift, wobei der Schenkel (4) des etwa U-förmigen Körpers der Bügelschelle (1) in dieser Montagesolllage zwischen dem hakenartigen Vorsprung (14) des Halteelements (13) und einem von der Gegenwanne (8) abragenden Bereich (15), der einen Übergangsbereich von der Gegenwanne (8) zum Halteelement (13) bildet, angeordnet ist.

2. Bügelschelle (1) nach Anspruch 1, **dadurch gekennzeichnet, dass** die Profilierung durch parallele, sich zumindest über einen Teil der Länge der Gegenwanne (8) erstreckende Längsstege (11), die in der Montagesolllage etwa parallel zum Langformgut beziehungsweise Kabel (2) verlaufend und somit quer zur Profilschiene (3) angeordnet sind, gebildet ist.

3. Bügelschelle (1) nach Anspruch 1, **dadurch gekennzeichnet, dass** die Profilierung durch parallele, sich mindestens über einen Teil der Länge oder der Breite der Gegenwanne erstreckende schwalbenschwanzartige Stege (16) gebildet ist, wobei der Zwischenraum zwischen zwei parallelen schwalbenschwanzartigen Stegen einen Aufnahmeraum für einen schwalbenschwanzartigen Steg der weiteren, identischen Gegenwanne bildet.

4. Bügelschelle (1) nach einem der Ansprüche 1 bis 3, **dadurch gekennzeichnet, dass** die Profilierung Rastvorsprünge (12) aufweist, wobei in der miteinander verbundenen Lage zweier Gegenwannen (8) die Rastvorsprünge (12) jeweils einen Wegbegrenzungsanschlag für einen an der anderen Gegenwanne (8) ausgebildeten Rastvorsprung (12) bilden.

## Claims

1. A bracket clamp (1) for attaching elongated products, such as in particular cables (2), at a profile rail, in particular a C-type profile rail (3), including an approximately U-shaped body, between the legs (4) of the U-shape a pressure trough (7) adjustable by means of a set screw (6) penetrating the base (5) of the U-shape being disposed, said pressure trough (7) being able to partially surround the elongated product (2) and to press it against a counter trough (8) to be placed on the profile rail (3), the free end of the legs of the approximately U-shaped body having a hook shape and being able to engage behind the angled free ends (10) of the legs of the profile rail (3),
**characterized by that** the counter trough (8) includes, on its side facing away from the elongated product, in particular the cable (2), a profile (11, 16), by means of which the counter trough (8) can be connected or is connected to the profile of another identical counter trough (8) so to form a double through (18), the counter trough (8) including a holding member (13) laterally projecting and extending approximately in parallel to the longitudinal direction of the counter trough (8), which holding member (13) surrounds a leg (4) of the approximately U-shaped body of the bracket clamp (1) and after reaching the intended mounting position engages behind this leg (4) with a hook-type projection (14) formed at the free end of the holding member (13), the leg (4) of the approximately U-shaped body of the bracket clamp (1) being disposed, in this intended mounting position, between the hook-type projection (14) of the holding member (13) and a section (15) projecting from the counter trough (8) and forming a transition section from the counter trough (8) to the holding member (13).

2. The bracket clamp (1) of claim 1, **characterized by that** the profile is formed by parallel longitudinal webs (11) extending at least over part of the length of the counter trough (8), said longitudinal webs (11), in the intended mounting position, being arranged approximately in parallel to the elongated product or cable (2) and thus transversely to the profile rail (3).

3. The bracket clamp (1) of claim 1, **characterized by that** the profile is formed by parallel dovetail-like webs (16) extending at least over part of the length or the width of the counter trough, the space between two parallel dovetail-like webs forming a receiving space for a dovetail-like web of the further identical counter trough.

4. The bracket clamp (1) of one of claims 1 to 3, **characterized by that** the profile includes latching projections (12), in the interconnected position of two counter troughs (8) the latching projections (12) respectively forming a travel limitation stop for a latching projection (12) formed at the other counter trough (8).

## Revendications

1. Étrier de support (1) pour fixation de produits allongés, comme en particulier des câbles (2), à un rail profilé, en particulier un rail profilé en forme de C (3), comportant un corps environ en forme d'U, entre les jambes (4) de la forme d'U une plaque de pression (7) réglable au moyen d'une vis de réglage (6) pénétrant la base (5) de la forme d'U étant disposée, cette plaque de pression (7) étant capable de partiellement entourer le produit allongé (2) et de l'enserrer contre une contre-plaque (8) à être positionner sur le rail profilé (3), l'extrémité libre des jambes du corps environ en forme d'U ayant une forme de crochet et étant capable de s'engager derrière les extrémités libres (10) coudées des jambes du rail profilé (3),
**caractérisé en ce que** la contre-plaque (8) comporte, sur son côté opposé au produit allongé, en particulier au câble (2), un profil (11, 16), au moyen duquel la contre-plaque (8) peur être liée ou est liée au profil d'une autre contre-plaque (8) identique en formant une double plaque (18), la contre-plaque (8) comportant un élément de retenue (13) latéralement en saillie et s'étendant environ en parallèle à la direction longitudinale de la contre-plaque (8), cet élément de retenue (13) entourant une jambe (4) du corps environ en forme d'U de l'étrier de support (1) et après avoir atteint la position de montage de consigne s'engage derrière cette jambe (4) avec une saillie (14) en forme de crochet réalisée à l'extrémité libre de l'élément de retenue (13), la jambe (4) du corps environ en forme d'U de l'étrier de support (1) étant disposée, dans la position de montage de consigne, entre la saillie (14) en forme de crochet de l'élément de retenue (13) et une zone (15) faisant saillie de la contre-plaque (8) et formant une zone de transition de la contre-plaque (8) à l'élément de retenue (13).

2. Étrier de support (1) selon la revendication 1,
**caractérisé en ce que** le profil est réalisé par des entretoises (11) longitudinales parallèles s'étendant au moins sur une partie de la longueur de la contre-plaque (8), ces entretoises (11) longitudinales, dans la position de montage de consigne, étant arrangées environ en parallèle au produit allongé ou câble (2) et donc transversalement au rail profilé (3).

3. Étrier de support (1) selon la revendication 1,
**caractérisé en ce que** le profil est réalisé par des entretoises (16) parallèles en forme d'aronde s'étendant au moins sur une partie de la longueur ou de la largeur de la contre-plaque, l'espace intermédiaire entre les deux entretoises parallèles en forme d'aronde formant un espace de réception pour une entretoise en forme d'aronde de l'autre contre-plaque identique.

4. Étrier de support (1) selon une des revendications 1 à 3, **caractérisé en ce que** le profil comporte des saillies d'encliquetage (12), dans la position liée de deux contre-plaques (8) les saillies d'encliquetage (12) respectivement formant une butée de limitation du mouvement pour une saillie d'encliquetage (12) réalisée à l'autre contre-plaque (8).
